**Europäisches Patentamt**

(19) **European Patent Office**

**Office européen des brevets**

(11) Publication number : **0 223 269 B1**

# (12) EUROPEAN PATENT SPECIFICATION

(45) Date of publication of patent specification :
**14.02.90**

(51) Int. Cl.⁵ : **A 01 B 29/04**, A 01 B 49/02,
A 01 B 29/06

(21) Application number : **86201656.5**

(22) Date of filing : **25.09.86**

(54) **A soil cultivating machine.**

(30) Priority : **27.09.85 NL 8502639**

(43) Date of publication of application :
**27.05.87 Bulletin 87/22**

(45) Publication of the grant of the patent :
**14.02.90 Bulletin 90/07**

(84) Designated contracting states :
**DE FR GB IT**

(56) References cited :
**EP--A-- 0 091 878**
**DE--A-- 2 912 392**
**DE--A-- 3 218 635**
**DE--U-- 7 123 427**
**DE--U-- 7 215 380**
**DE--U-- 7 812 988**
**US--A-- 1 507 988**
**US--A-- 2 776 532**

(73) Proprietor : **C. van der Lely N.V.**
**Weverskade 10 P.O. Box 26**
**NL-3155 ZG Maasland (NL)**

(72) Inventor : **Van der Lely, Cornelis**
**7, Brüschenrain**
**Zug (CH)**

(74) Representative : **Mulder, Herman et al**
**Octrooibureau Van der Lely N.V. Weverskade 10 P.O.**
**Box 26**
**NL-3155 ZG Maasland (NL)**

Jouve, 18, rue St-Denis, 75001 Paris, France

## Description

The invention relates to a soil cultivating machine comprising a frame and at least one roller, which is disposed behind a plurality of motor-driven cultivating members, whereby the working depth of the cultivating members can be adjusted by setting the height of the roller, the said roller comprises rings which are connected by means of hollow elongate elements that extend lengthwise of the roller throughout its working width.

A soil cultivating machine as mentioned above is disclosed in the German patent application 3218635. With this machine there is provided a roller whereby tubes connecting the rings are disposed within the periphery of the rings. The constitution of the roller is such that during operation an uninterrupted rotation is not always ensured.

In order to ensure an ininterrupted rotation suggestions have been made for a heavy roller, as for instance known from the U.S. patent 2 776 532. However, rollers of this kind are rather expensive and also form a disadvantage when the implement is carried by the three-point lifting hitch of a tractor which hitch during transport can be loaded in an unfavourable way. This is in particular the case when the soil cultivating machine forms a combination with an other implement for instance a sowing machine.

The invention has now for its object to provide a soil cultivating machine of the kind as known from the German patent application with a roller constituted such that an ininterrupted rotation of the roller during operation is ensured and nevertheless its manufacture can be cheaply and its weight can below.

In accordance with the invention the elongate elements are connected to the outer periphery of the said rings and are folded from plate material, the hollow portion of the elements being located, relative to the direction of rotation imparted to the roller during operation, behind an outwardly directed projection constituted by an end of the plate.

With this construction it is possible to effectively bring the roller in a continuous rotation during operation due to the disposition of the elongate hollow elements with respect to the rings and their provision with a projection.

Further the manufacturing of the roller can be rather cheap and its weight is light.

For a better understanding of the invention and to show how it may be carried into effect, reference will now be made. by way of example, to some embodiments shown in the accompanying drawings, in which :

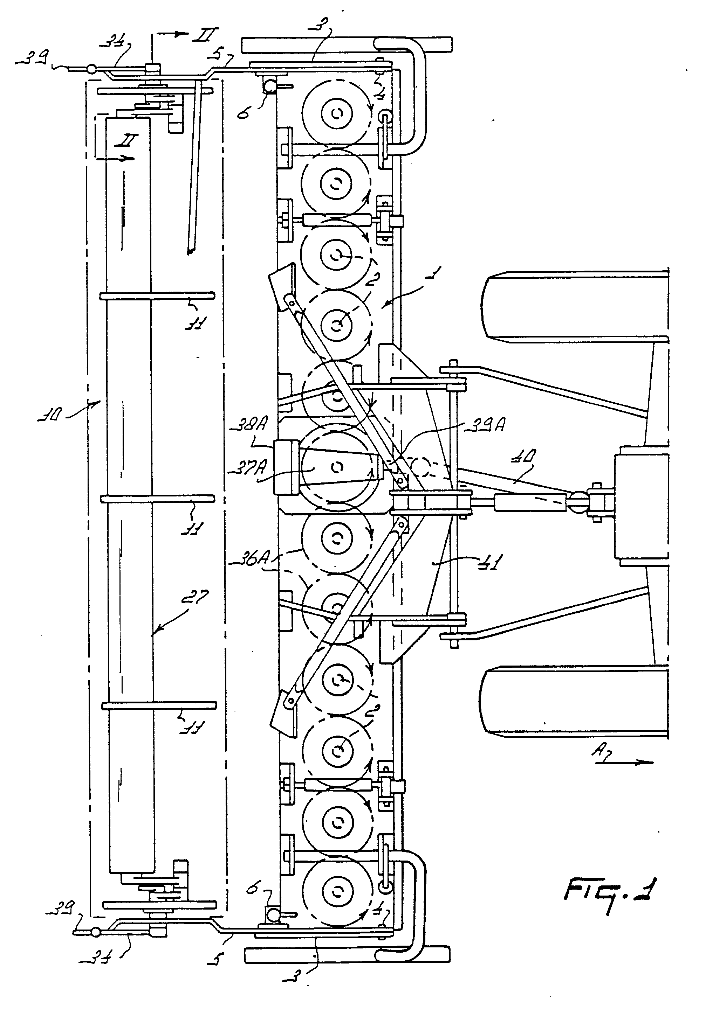

Figure 1 is a plan view of a roller according to the invention, used in a soil cultivating member comprising motor-driven cultivating members ;

Figure 2 is, on an enlarged scale, a view taken on the line II-II in Figure 1, whilst

Figure 3 is a view taken on the line III-III in Figure 2 ;

Figure 4 is a view in accordance with Figure 3 of a second embodiment of a roller in accordance with the invention ;

Figure 5 is a cross-sectional view of a second embodiment of an elongate element present at the periphery of the roller.

The arrangement shown in the Figures relates to a soil cultivating machine, more specifically a machine for preparing a seedbed. The machine comprises a frame portion 1 which extends transversely of the direction of operative travel A and in which upwardly, preferably vertically extending shafts 2 of cultivating members are bearing-supported at mutually equal distances of preferably 25 cms. In a manner not further shown, each cultivating member is provided a with an at least substantially horizontal carrier disposed on that end of the shaft 2 projecting from under the frame portion 1 and having near its ends downwardly extending cultivating elements which may be in the form of tines. The ends of the frame portion 1 are closed by means of upwardly directed plates 3 which extend at least substantially in parallel to the direction of operative travel A.

Near its front end each plate 3 has a stub 4 which extends transversely of the direction of operative travel A and around with an arm 5, which extends rearwardly along the inner side of the plates, is pivotable. Each arm 5 can be adjusted in height to a plurality of positions by means of an adjusting device arranged near the rear end of a plate 3 and being constituted by a threaded spindle 6.

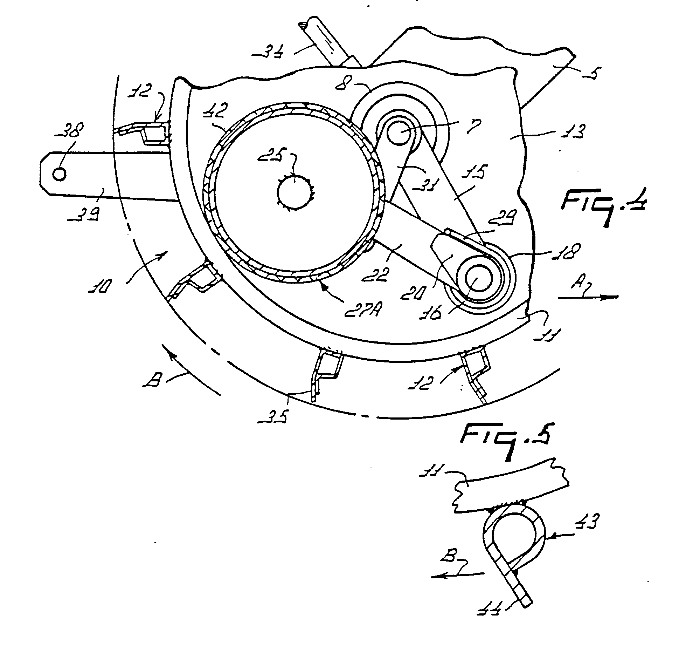

As is shown in Figure 3, each arm 5 extends at the rear to its free end partially at a downward angle and to the rear. Near the lower end of each obliquely downwardly and rearwardly extending portion of an arm 5 a roller 10 is arranged freely rotatably by means of a shaft 7 which extends transversely of the intended direction of operative travel A and is supported by a bearing 9 arranged in a hub 8. The roller 10 has a portion in the form of a cage, which portion is formed by rings 11 which are located equidistantly from each other near and between the ends of the roller and whose outer peripheries are provided with elongate elements 12 which are disposed through equal circumferential angles and extend helically relative to the rotary axis a of the roller.

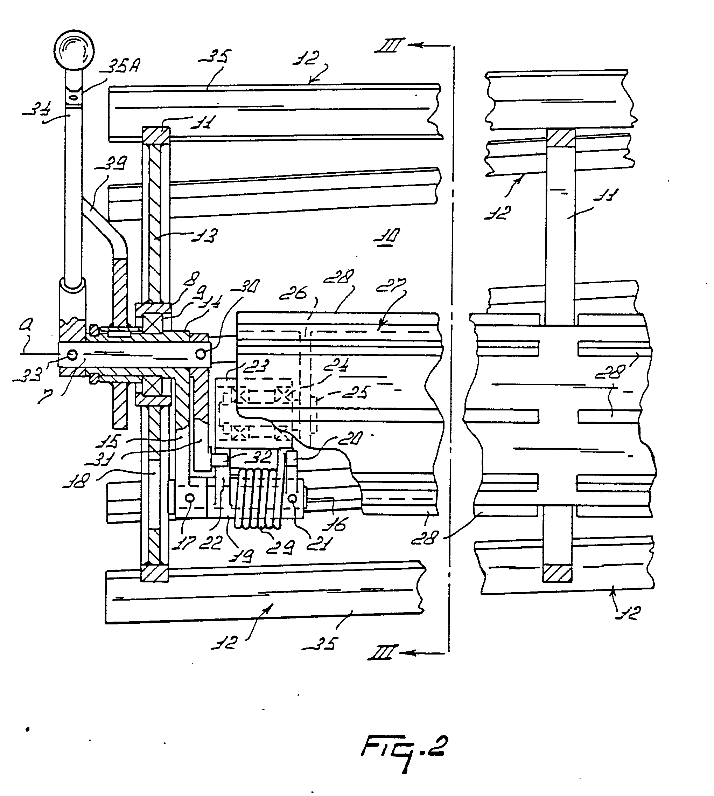

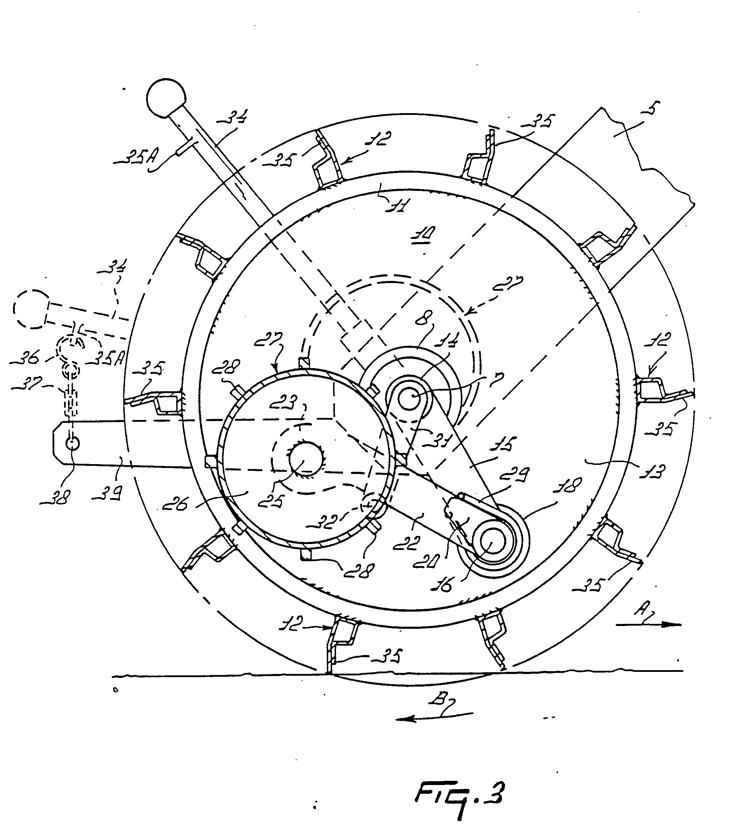

Figure 3 shows that there are a total of ten elongate elements 12. The elongate elements 12 extend to the ends of the roller to beyond the outermost rings 11 (Figure 2). Each one of the outermost rings is provided at its interior side with a disc 13 whose centre incorporates the hub 8 in which the bearing 9 is accommodated. The bearing 9 cooperates with a bushing 14 placed around the shaft 7 and forming part of an arm 15 which extends along the interior side of a disc 13.

The arm 15 has a length equal to approximately 2/3 of half the diameter of the disc 13. At each free end each arm 15 has a pin 16 which is locked by a pin 17. The pin 17 extends at least substantially parallel with the shaft 7; the pin extending inwardly from the disc 13. A bushing 19 is placed around the pin 16 which can be positioned or removed through an aperture 18 in the disc 13. The bushing 19 which is pivotable relative to the pin 16, is enclosed between the arm 15 and a projection 20 provided near the end of the pin 16, which projection 20 is locked by means of a pin 21. The bushing 19 has an arm 22 which from the bushing extends at an upward angle and rearwardly relative to the intended direction of operative travel A (Figure 3). At its free end the arm 22 is provided with a bearing housing 23 in which two spaced apart bearings 24 are accommodated which can cooperate with a shaft 25 which extends at least substantially parallel to the pin 16 and the shaft 7. The shaft 25 is positioned in the centre of a disc 26, which covers an end of a tubular member 27 located inside the cage-formed portion of the roller 10. In this situation, the disc 26 is positioned such that the tubular member 27 extends to beyond the disc and, as is shown in Figure 2, encloses for the greater part the bearing housing 23.

At its periphery the tubular member 27, which substantially extends throughout the total, overall length of the roller 10, has rib-like projections 28 arranged at equal circumferential angles from each other and extending in parallel to the rotary axis of the tubular member. A total of eight rib-like projections 28 are provided on the outer periphery of the tubular member 27. The rib-like projections are interrupted each time in the region of the rings 11.

The bushing 19 is surrounded by a spring 29 which, by means of one end, bears against the arm 22 and with the other end against the projection 20, the arrangement being such that by means of the spring 29 the tubular member 27 is pushed against the interior side of the rings 11 of the cage portion of the roller 10 (Figure 3). The end of the shaft 7 is provided, at the interior, with an arm 31 by means of a pin 30, the arm 31 having at its free end a projection 32 which bears against the bottom side of the arm 22 (Figures 2 and 3). The other end of the shaft 7 is provided with a lever 34 by means of a pin 33. The lever 34 has at its upper end a lug 35A having an aperture in which one end of a hook 36 can be hooked. The hook 36 forms part of a chain 37 whose lower end is accommodated in an aperture 38 of an arm 39. From that portion of an arm 5 which extends at a downward angle and rearwardly, the arm 39 extends horizontally to the rear. Initially, the arm 39 extends at least parallel to the disc 13 and is thereafter folded outwardly to pass into a portion which is located at least substantially below the lever 34, the chain 37 being connected to that portion. When the lever 34 is in the position shown in Figure 3 by means of solid lines, the tubular member 27 is pushed against the inner side of the rings 11 by means of the spring 29, the projections 28 extending to into the spacings between the rings 11. By moving downwardly the levers 34 at the ends of the roller 10 into the position indicated by the solid lines and fixing same in this position with the aid of the hook 36 and the chain 37, the tubular member 27 is adjusted to the inoperative position, indicated by the solid lines, by means of the arm 31 and the projection 32.

The elongate elements 12 which, as mentioned in the foregoing, form together with the rings 11 a cage-shaped portion of the roller 10, are made of a plate, the plate being bent such that it has a profile as is shown in greater detail in Figure 3. The profile is such that, in a cross-sectional view, the elongate elements are hollow and have an at least substantially rectangular, substantially square cross-section. At the side remote from the rings 11 there are two facing plate portions which, as is shown in Figure 3, form a projection 35 which relative to the direction of rotation B imparted to the roller during operation, is directed rearwardly and extends through a distance which is at least substantially equal to the height of the hollow, square portion of the elongate element. As Figure 3 further shows, a plate portion which, relative to the direction of rotation B, is positioned at the rear side, is shorter, consequently improving the soil penetrating power of the projection. By means of one side of the quadrangular profile the elongate elements are fastened to the outer side of the respective rings 11.

Inside the frame portion 1, a pinion 36A is provided on each shaft 12, the arrangement being such that the pinions on neighbouring shafts 12 are in driven engagement with each other. Near its centre, the shaft 2 of a cultivating member is extended, and reaches into a gear box 37A in the interior of which the shaft is in driving connection via a bevel gear transmission and a speed regulator 38A at the rearside of the gear-box, with a shaft 39A which extends in the intended direction of operative travel A and can be coupled to the power take-off shaft of a tractor via an intermediate shaft 40.

Near its centre the frame portion 1 includes a trestle 41 which constitutes a three-point connection for hitching the machine to the three-point lifting hitch of a tractor.

The machine described in the foregoing operates as follows:

During operation the machine is connected to the three-point lifting hitch of the tractor by means of the trestle 41 and each cultivating member is caused to rotate from the power take-off shaft of the tractor via the intermediate shaft 40 and the above-described transmission, the arrangement being such that neighbouring cultivating members rotate in opposite directions and thereby cultivating with their cultivating elements at least contiguous strips of soil.

The working depth of the cultivating members can be set by means of the roller 10 by pivoting the respective arms 5 with the aid of the threaded spindles 6 around the journals 4 disposed near the front ends of the plates 3.

Using the tubular member 27 disposed within the cage-shaped portion of the roller 10, constituted by the rings 11 and the elongate elements 12 made of plate material, it is possible, during operation to prevent earth from being forced to the interior of the roller, which is undesirable, thus negatively influencing the function of the roller. As is shown in Figure 3, the tubular member 27, when in its operating position, is located in the rearmost, lower quadrant of the roller.

The efficiency of the tubular member 27 is still further increased by the rib-like projections 28 disposed on the outer periphery of the member, as a result of which the member which is caused to rotate because of its contact with the rings 11, can more effectively grip the soil to be removed.

When stones or other hard objects such as roots, come into contact with the tubular member 27, the member can deflect inwardly against the action of the spring 29 so that damage is prevented. Hereby the member is pivotable around the pivotal points constituted by the pins 16, which points, as can be seen in Figure 3, are located in the foremost lower quadrant of the roller.

The hollow elongate elements 12 folded from plate material enable a light-weight, robust construction, the projections 35, more specifically when the tubular member is used, increasing the continuity of the rotation. By means of the springloaded support near the pivotal point the tubular member 27 can, during operation, be given a slightly vibrating motion which still further increases the efficiency of its operation.

If soils are being cultivated when there is no or hardly any risk of the roller 10 being clogged by earth penetrating into the roller between the elongate elements 12, it is possible to adjust the tubular member 27 in the manner already described in the foregoing to the position illustrated by the solid lines, by means of the adjusting member disposed at both ends of the rollers and being in the form of a lever 34, thus rendering the member inoperative. As a result thereof the roller can rotate more easily during operation, so that unnecessary slip is prevented.

In the embodiment illustrated in Figure 4 the tubular member 27A is disposed in exactly the same manner as in the first embodiment; however in this embodiment the tubular member is not provided with projections, but with a synthetic material or rubber layer 42 present at the outer periphery. Because of the presence of the synthetic material or rubber the tubular member is less prone to adhering soil.

Figure 5 shows an elongate element 43 folded from plate material. The plate is folded such that, together with a projection 44, the hollow elongate element 43 forms a « d », and is arranged such that relative to the direction of rotation B imparted to the roller 10, the hollow portion is located before the projection 44. Also then the length of the projection 44, which is also directed rearwardly relative to the direction of rotation B, is at least substantially equal to the diameter of the hollow elongate element.

The use of the above-described elongate elements folded from plate material provide a light-weight structure which nevertheless is adequately rigid, the projection of each elongate element, extending at a rearward angle and outwardly relative to the direction of rotation being capable of imparting an appropriately continuous rotation to the roller which preferably has a diameter of approximately 50 cms and a length of 3 mtrs in spite of the use of the respective tubular members 27 and 27A disposed within the cage portion.

## Claims

1. A soil cultivating machine comprising a frame and at least one roller (10), which is disposed behind a plurality of motor-driven cultivating members, whereby the working depth of the cultivating members can be adjusted by setting the height of the roller, the said roller (10) comprises rings (11) which are connected by means of hollow elongate members (12, 43) that extend lengthwise of the roller throughout its working width, characterized in that the said elongate elements (12, 43) are connected to the outer periphery of the said rings (11) and are folded from plate material, the hollow portion of the elements (12, 43) being located relative to the direction of rotation imparted to the roller during operation, behind an outwardly directed projection (35, 44) constituted by an end of the plate.

2. A soil cultivating machine as claimed in claim 1, characterized in that the projection (35, 44) extends at a rearward angle relative to the direction of rotation of the roller (10).

3. A soil cultivating machine as claimed in claim 1 or 2, characterized in that inside the roller (10) a member is disposed which is lockable in at least one position.

4. A soil cultivating machine as claimed in claim 4, characterized in that the member (27) consists at least partly of synthetic material or rubber.

5. A soil cultivating machine as claimed in claim 3 or 4, characterized in that the member (27) is capable of deflecting against the action of a spring.

6. A soil cultivating machine as claimed in any one of the preceding claims 3-5, characterized in that the member (27) is pivotable around a pivotal point (16) located in front of the member and in the foremost lower quadrant of the roller.

7. A soil cultivating machine as claimed in any one of the preceding claims 3-6, characterized by adjusting means for adjusting the member (27) to an inoperative position.

8. A soil cultivating machine as claimed in claim 6 or 7, characterized in that a spring loaded mechanism is provided against whose action the member (27) is capable of pivoting, the spring loaded mechanism comprising a spring (29) disposed around a journal (16) which constitutes the pivotal point.

9. A soil cultivating machine as claimed in claim 7 or 8, characterized in that the adjusting means comprises a lever (34), one end of which is lockable in a plurality of positions and the other is capable of co-operating by means of a projection (32) with a pivotal supporting arm (22) of the member.

10. A soil cultivating machine as claimed in any one of the preceding claims 3-9, characterized in that the member (27) is a tubular member and freely rotatable.

11. A soil cultivating machine as claimed in any one of the claims 3-10 characterized in that, at its periphery, the member (27) is provided with projections (28).

## Patentansprüche

1. Bodenbearbeitungsmaschine mit einem Rahmen und mindestens einer Walze (10), die hinter einer Mehrzahl motorisch angetriebener Bearbeitungswerkzeuge angeordnet ist, wobei die Arbeitstiefe der Bearbeitungswerkzeuge durch Höheneinstellen der Walze einstellbar ist und die Walze (10) Ringe (11) aufweist, die durch hohle langgestreckte Glieder (12, 43) verbunden sind, welche sich längs der Walze über deren ganze Arbeitsbreite erstrecken, dadurch gekennzeichnet, daß die genannten Längselemente (12, 43) am Außenumfang der Ringe (11) angebracht und aus Flachmaterial gebogen sind, und daß die Hohlräume der Elemente (12, 43), bezogen auf die der Walze im Betrieb erteilte Drehrichtung, hinter einem auswärts gerichteten Vorsprung angeordnet sind, der durch ein Ende des Flachteiles gebildet ist.

2. Bodenbearbeitungsmaschine nach Anspruch 1, dadurch gekennzeichnet, daß sich der Vorsprung (35, 44), bezogen auf die Drehrichtung der Walze (10), in einem Winkel nach hinten gerichtet erstreckt.

3. Bodenbearbeitungsmaschine nach Anspruch 1 oder 2, dadurch gekennzeichnet, daß innerhalb der Walze (10) ein Bauteil angeordnet ist, das in mindestens einer Lage fixierbar ist.

4. Bodenbearbeitungsmaschine nach Anspruch 3, dadurch gekennzeichnet, daß das Bauteil (27) mindestens teilweise aus Kunststoff oder Gummi besteht.

5. Bodenbearbeitungsmaschine nach Anspruch 3 oder 4, dadurch gekennzeichnet, daß das Bauteil (27) gegen die Kraft einer Feder ausweichbar ist.

6. Bodenbearbeitungsmaschine nach einem der Ansprüche 1 bis 5, dadurch gekennzeichnet, daß das Bauteil (27) um einen Schwenkpunkt (16) schwenkbar ist, der sich vor dem Bauteil und im vorderen unteren Quadranten der Walze befindet.

7. Bodenbearbeitungsmaschine nach einer der Ansprüche 3 bis 6, gekennzeichnet durch eine Stelleinrichtung zum Einstellen des Bauteiles (27) in eine unwirksame Lage.

8. Bodenbearbeitungsmaschine nach Anspruch 6 oder 7, dadurch gekennzeichnet, daß ein federbelasteter Mechanismus vorgesehen ist, gegen dessen Wirkung das Bauteil (27) schwenkbar ist, und der eine Feder (29) aufweist, die ein Gelenk (16) umgibt, welches den Schwenkpunkt bildet.

9. Bodenbearbeitungsmaschine nach Anspruch 7 oder 8, dadurch gekennzeichnet, daß die Stelleinrichtung einen Hebel (34) aufweist, dessen eines Ende in mehreren Lagen festzustellen ist, und dessen anderes Ende mittels eines Vorsprunges (32) mit einem schwenkbaren Tragarm (22) des Bauteiles zusammenwirken kann.

10. Bodenbearbeitungsmaschine nach einem der Ansprüche 3 bis 9, dadurch gekennzeichnet, daß das Bauteil (27) rohrförmig und frei drehbar ist.

11. Bodenbearbeitungsmaschine nach einem der Ansprüche 3 bis 10, dadurch gekennzeichnet, daß das Bauteil (27) an seinem Umfang mit Vorsprüngen (28) versehen ist.

## Revendications

1. Machine pour cultiver le sol comprenant un châssis et au moins un rouleau (10) qui est disposé derrière une pluralité d'organes de culture du sol entraînés par un moteur, la profondeur de travail de ces organes pouvant être ajustée en réglant la hauteur du rouleau, ledit rouleau (10) comprenant des anneaux (11) qui sont reliés par des éléments creux allongés (12, 43) qui s'étendent longitudinalement par rapport au rouleau, sur toute sa largeur de travail, caractérisée en ce que lesdits éléments allongés (12, 43) sont reliés à la périphérie extérieure desdits anneaux (11) et sont réalisés en tôle pliée, la partie creuse des éléments (12, 43) étant située, par rapport au sens de rotation imparti au rouleau pendant le travail, derrière une partie saillante (35, 44) dirigée vers l'extérieur, constituée par une extrémité de la plaque de tôle.

2. Machine pour cultiver le sol selon la revendication caractérisée en ce que la partie saillante (35, 44) s'étend angulairement vers l'arrière par rapport au sens de rotation du rouleau (10).

3. Machine pour cultiver le sol selon la revendication 1 ou 2, caractérisée en ce qu'est disposé dans le rouleau (10) un organe pouvant être verrouillé en au moins une position.

4. Machine pour cultiver le sol selon la revendication 3, caractérisée en ce que l'organe verrouillable (27) est constitué au moins partiellement de matière synthétique ou de caoutchouc.

5. Machine pour cultiver le sol selon la revendication 3 ou 4, caractérisée en ce que l'organe (27) est capable de dévier en s'opposant à l'action d'un ressort.

6. Machine pour cultiver le sol selon l'une quelconque des revendications 3 à 5 précédentes, caractérisée en ce que l'organe (27) est pivotant autour d'un point de pivotement (16) situé en avant dudit organe et dans le quadrant antérieur le plus bas du rouleau.

7. Machine pour cultiver le sol selon l'une quelconque des revendications 3 à 6 précédentes, caractérisée par un moyen de réglage pour régler l'organe (27) sur une position inactive.

8. Machine pour cultiver le sol selon la revendication 6 ou 7, caractérisée en ce qu'il est prévu un mécanisme taré par un ressort, à l'encontre duquel peut pivoter l'organe (27), le mécanisme à ressort comprenant un ressort (29) disposé autour d'un tourillon (16) qui constitue le point de pivotement.

9. Machine pour cultiver le sol selon la revendication 7 ou 8, caractérisée en ce que le moyen de réglage comprend un levier (34) dont une extrémité est verrouillable en une pluralité de positions et l'autre est capable de coopérer au moyen d'une partie saillante (32) avec un organe pivotant (22) de support de l'organe (27).

10. Machine pour cultiver le sol selon l'une quelconque des revendications 3 à 9 précédentes, caractérisée en ce que l'organe (27) est un organe tubulaire et peut tourner librement.

11. Machine pour cultiver le sol selon l'une quelconque des revendications 3 à 10, caractérisée en ce que l'organe (27) est muni d'éléments saillants (28) sur sa périphérie:

FIG.1

FIG.2

FIG.3

FIG.4

FIG.5